# EUROPÄISCHE PATENTSCHRIFT

(11) **EP 0 447 964 B1**
(45) Veröffentlichungstag und Bekanntmachung des Hinweises auf die Patenterteilung: **21.06.1995**
(21) Anmeldenummer: 91103925.3
(22) Anmeldetag: 14.03.1991
(51) Int. Cl.: C08J 7/04, C08K 5/00, D06M 15/347, C09D 5/32, C08L 71/10

(54) **Geformte Gebilde aus aromatischen Polyetherketonen, die gegen UV-Strahlung stabilisiert sind, und ein Verfahren zu deren Herstellung**
Shaped articles of aromatic polyetherketones stabilized against UV radiation and process for preparing them
Articles en formes de poly(éther-cétones) aromatiques stabilisés contre les rayons UV et procédé pour leur préparation

(30) Priorität: 22.03.1990 DE 4009209
(43) Veröffentlichungstag der Anmeldung: 25.09.1991
(73) Patentinhaber: BASF Aktiengesellschaft, 67063 Ludwigshafen (DE)
(72) Erfinder: Matthies, Hans Georg, Dr., W-6700 Ludwigshafen (DE); Eichler, Rainer, W-6715 Lambsheim (DE); Franz, Andrea, W-6750 Kaiserslautern (DE)

(56) Entgegenhaltungen:
- WO-A-86/04592
- WORLD PATENTS INDEX LATEST Week 8944, Derwent PublicationsLtd., London, GB; AN 89-320679 & JP-A-1239 041 (T. IIZUKA) 25. September 1989

## Beschreibung

Polyetherketone, wie sie beispielsweise aus der DE-C 2 433 278 bekannt sind, haben einen hohen Schmelzpunkt, z.B. 350°C und höher, und eignen sich zur Herstellung von hochtemperaturbeständigen Gegenständen.

Zur Wahrung der hervorragenden Gebrauchseigenschaften bedürfen sie jedoch der Stabilisierung gegenüber UV-Strahlung. Aufgrund des hohen Schmelzpunktes und der dadurch bedingten hohen Verarbeitungstemperaturen, hat es sich als sehr schwierig herausgestellt, UV-Stabilisatoren direkt der Schmelze des Polyetherketons zuzufügen, da UV-Stabilisatoren bei den erforderlichen hohen Temperaturen zur Zersetzung neigen.

Die WO-A 86/04592 beschreibt thermoplastische Substrate, die mit ausgewählten Methylacrylaten beschichtet sind.

Aus der US-PS 4 089 996 ist bekannt, daß man die Oberfläche von geformten Gegenständen wie Folien aus aromatischen Polysulfonen, mit einem Gemisch aus Zinn- und Titanverbindungen behandelt, um eine Stabilisierung gegenüber UV-Strahlung zu erzielen. Abgesehen davon, daß diese Arbeitsweise sehr aufwendig ist, hat sie sich für aromatische Polyetherketone nicht bewährt.

Es war deshalb die technische Aufgabe gestellt, geformte Gebilde aus aromatischen Polyetherketonen wirksam gegen UV-Strahlung zu stabilisieren, eine Schädigung der Stabilisatoren zu vermeiden und ein wenig aufwendiges Verfahren zur Stabilisierung zur Verfügung zu stellen.

Diese Aufgabe wird gelöst durch geformte Gebilde aus aromatischen Polyetherketonen die gegen UV-Strahlung stabilisiert sind, dadurch gekennzeichnet, daß sie mit mindestens einem filmbildenden Polymeren, ausgewählt aus der Gruppe Polyvinylalkohol, Polyvinylacetat, Polyvinylpyrrolidon, Polyamid, Polyarylsulfon und deren Copolymeren, mit einem Gehalt an mindestens einem in dem filmbildenden Polymeren gelösten und/oder dispergierten UV-Strahlung absorbierenden Mittel beschichtet sind.

Ferner ist ein Gegenstand der Erfindung ein Verfahren zur Herstellung von geformten Gebilden aus aromatischen Polyetherketonen die gegen UV-Strahlung stabilisiert sind, wobei man geformte Gebilde aus aromatischen Polyetherketonen mit einer gegenüber aromatischen Polyetherketonen indifferenten Lösung oder Dispersion mindestens eines filmbildenden Polymeren, ausgewählt aus der Gruppe Polyvinylalkohol, Polyvinylacetat, Polyvinylpyrrolidon, Polyamid, Polyarylsulfon und deren Copolymeren, die mindestens ein UV-Strahlen absorbierendes Mittel gelöst und/oder dispergiert enthält, beschichtet und das Lösungs- oder Dispergiermittel bei erhöhter Temperatur unter Ausbildung eines Polymerfilmes entfernt.

Die erfindungsgemäßen geformten Gebilde aus aromatischen Polyetherketonen, die gegen UV-Strahlen stabilisiert sind, haben den Vorteil, daß sowohl der aufgebrachte Polymerfilm als auch der darin gelöste oder dispergierte UV-Stabilisator ultraviolette Strahlung absorbieren. Das neue Verfahren hat den Vorteil, daß es gestattet, mehrere Lagen aus verschiedenen Polymeren und/oder verschiedenen UV-absorbierenden Mitteln auf die geformten Gebilde aus aromatischen Polyetherketonen aufzubringen. Ferner hat das neue Verfahren den Vorteil, daß es technisch wenig aufwendig ist und die UV-stabilisierenden Mittel thermisch wenig belastet werden. Schließlich hat das neue Verfahren den Vorteil, daß die UV-stabilisierende Schicht auf den geformten Gebilden aus Polyetherketon gut haftet.

Geeignete aromatische Polyetherketone haben vorteilhaft eine relative Viskosität von mehr als 1,0, z.B. 1,2 bis 1,8, insbesondere 1,3 bis 1,7, jeweils gemessen 0,5 gew.%ig in 96 gew.%iger Schwefelsäure bei 25°C. Bevorzugte Polyetherketone sind aufgebaut aus wiederkehrenden Struktureinheiten der Formeln I bis V 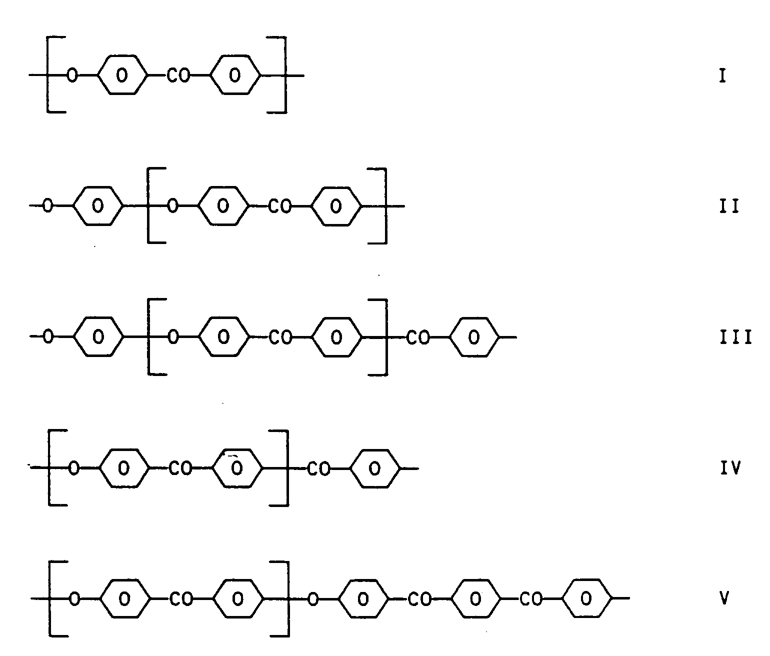
Geeignet sind auch Copolymere, in denen bis zu 50 % der CO-Gruppen durch SO₂-Gruppen, durch 1,4-Phenyleneinheiten oder durch 4,4'-Bisphenyleneinheiten ersetzt sind.

Unter geformten Gebilden sind in der Regel aus der Schmelze geformte Gebilde, insbesondere Folien, Fäden und Fasern sowie daraus hergestellte Gewebe, Gewirke oder Vliese zu verstehen. Besonders bevorzugt sind aus der Schmelze geformte Fäden und Fasern die verstreckt sind, z.B. auf das 1,2- bis 10-fache.

Die geformten Gebilde aus aromatischen Polyetherketonen sind mit mindestens einem filmbildenden Polymeren mit einem Gehalt an mindestens einem in dem filmbildenden Polymeren gelösten und/oder dispergierten UV-Strahlung absorbierenden Mittel beschichtet.

Geeignete filmbildende Polymere sind beispielsweise Polyvinylalkohol, Polyvinylacetat oder Polyvinylpyrrolidon.

Ferner sind als filmbildende Polymere geeignet Polyamide z.B. hergestellt aus 7- bis 11-gliedrigen Lactamen, z.B. Caprolactam oder Polyamide, hergestellt aus Dicarbonsäuren, z.B. C₆-C₁₂-Dicarbonsäuren und Diaminen, z.B. C₆-C₁₅-Diaminen. Geeignete Ausgangsstoffe sind beispielsweise Adipinsäure, Acelainsäure einerseits und Hexamethylendiamin, Octamethylendiamin oder 4,4'-Dicyclohexylmethan oder -propan andererseits. Geeignete Polymere sind auch Mischpolymere aus den genannten Ausgangsstoffen.

Weiter sind geeignet als filmbildende Polymere aromatische Polysulfone, aufgebaut aus wiederkehrenden Einheiten der allgemeinen Formel VI 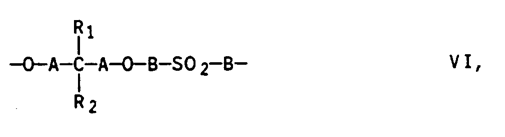
in der A und B gleich oder verschieden sein können und jeweils einen 1,4-Phenylenrest oder 1,7-Naphthalinrest bezeichnen und B auch einen 4-4'-Biphenylenrest bezeichnen kann und R₁ und R₂ gleich oder verschieden sein können und jeweils einen Alkylrest mit 1 bis 4 Kohlenstoffatomen bedeuten und/oder wiederkehrende Einheiten der allgemeinen Formel VII

―O―X―SO₂―X― VII,

in der X einen 1,4-Phenylenrest, 4,4'-Biphenylenrest oder einen 1,7-Naphthalinrest bedeutet. Geeignete Beispiele für wiederkehrende Einheiten der Formel VI und VII sind beispielsweise solche der Formeln VIII, IX und X 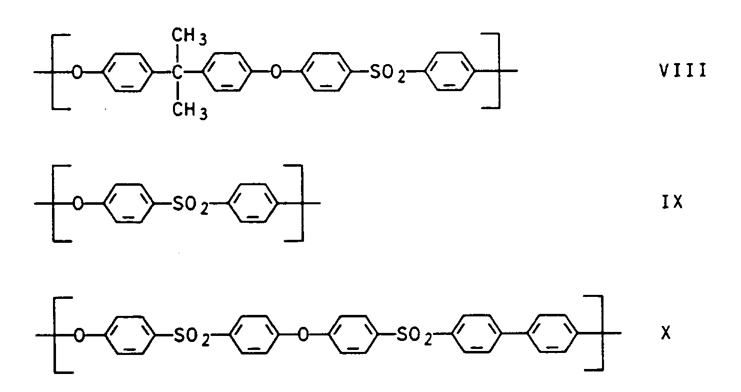
Besonders bevorzugt sind als filmbildende Polymere, Polysulfone und Polyethersulfone.

Geeignete UV-Strahlen absorbierende Mittel sind z.B. sterisch gehinderte Phenole wie 5-Methyl-3-dodecylphenol, Di-tert.-amylphenyl oder 4-tert.-Octylphenol.

Substituierte Benzophenone wie Bis-(2,4,4-dihydroxy)-benzophenon oder Bis-(2-hydroxy-4-methoxy-6-sulfonato)-benzophenon.

Weitere geeignete UV-Strahlen absorbierende Mittel sind beispielsweise Benztriazole wie 2-(2-Hydroxy-3-dodecyl-5-methylphenyl)-benzotriazol, 1,6-Hexandiol-bis-3-(3-benzotriazol-N-yl-4-hydroxy-5-tert.-butyl)-phenylpropanoat.

Die geformten Gebilde aus aromatischem Polyetherketon sind vollständig mit einer Schicht eines filmbildenden Polymeren, das ein UV-Strahlung absorbierendes Mittel enthält, umhüllt. Die umhüllende Schicht hat in der Regel eine Schichtdicke von 10 bis 50 ». Die umhüllende Schicht kann aus einer einzigen Lage oder aus mehreren, z.B. bis zu drei, Lagen aufgebaut sein. Die einzelnen Lagen können aus gleichen filmbildenden Polymeren oder jeweils verschiedenen filmbildenden Polymeren bestehen. Die filmbildende Polymerschicht enthält im allgemeinen 5 bis 40 Gew.% UV-Strahlung absorbierende Mittel, bezogen auf die umhüllende Polymerschicht. Der umhüllenden Schicht können mehrere UV-Strahlung absorbierende Mittel angewandt werden. Sofern mehrere Lagen aus filmbildenden Polymeren angewandt werden, können auch in jeder Lage verschiedene UV-Strahlung absorbierende Mittel enthalten sein.

Sofern Fäden und Fasern umhüllt werden beträgt die umhüllende Schicht im allgemeinen 2 bis 20 Gew.%, insbesondere 5 bis 15 Gew.%, bezogen auf das Gewicht der Fäden oder Fasern.

Die erfindungsgemäßen UV-stabilisierten geformten Gebilde aus aromatischen Polyetherketonen erhält man vorteilhaft in einem Verfahren bei dem man geformte Gebilde aus aromatischen Polyetherketonen mit einer gegenüber Polyetherketonen indifferenten Lösung oder Dispersion eines filmbildenden Polymeren, ausgewählt aus der Gruppe Polyvinylalkohol, Polyvinylacetat, Polyvinylpyrrolidon, Polyamid, Polyarylsulfon und deren Copolymeren, die mindestens ein UV-Strahlen absorbierendes Mittel gelöst und/oder dispergiert enthält, beschichtet und das Lösungsmittel oder Dispergiermittel bei erhöhter Temperatur unter Bildung eines Polymerfilmes entfernt.
Erfindungsgemäß werden Lösungsmittel verwendet, in denen Polyetherketone unlöslich sind.

Geeignete Lösungsmittel sind beispielsweise Wasser, Alkanole, z.B. Alkanole mit 1 bis 4 Kohlenstoffatomen und deren Ester mit niederen Fettsäuren z.B. mit 1 bis 4 Kohlenstoffatomen, Sulfoxide wie Dimethylsulfoxid oder am Stickstoffatom zweifach substituierte Carbonsäureamide wie Dimethylformamid, N-Dimethylacetamid, N-Diethylacetamid oder N-Methylpyrrolidon. Das Lösungsmittel richtet sich nach der Löslichkeit der vorgenannten Polymeren in solchen Lösungsmitteln. Geeignet sind auch Gemische solcher Lösungsmittel.

Geeignete Lösungen sind beispielsweise Polyvinylalkohol in Wasser, Polyvinylacetat in Alkoholen oder Estern, Polyamide in Alkoholen oder in N-Methylpyrrolidon, ferner Polyethersulfone in N-Methylpyrrolidon oder Dimethylformamid.

Der Gehalt an filmbildenden Polymeren in der Lösung beträgt vorteilhaft 5 bis 20, insbesondere 7 bis 15 Gew.%. Das Gewichtsverhältnis von filmbildenden Polymeren zu UV-Strahlen absorbierenden Mitteln beträgt von 2:1 bis 10:1, insbesondere von 3:1 bis 8:1.

Die filmbildende Polymere sowie UV-Strahlen absorbierenden Mittel enthaltende Lösung oder Dispersion wird zweckmäßig durch Tauchen oder Besprühen auf die geformten Gebilde aus aromatischen Polyetherketonen aufgetragen und eine gleichmäßige Schicht erzeugt. Anschließend wird das Lösungs- oder Dispergiermittel bei erhöhter Temperatur, z.B. von 50 bis 250°C in Abhängigkeit vom Siedepunkt des Lösungs- oder Dispergiermittels unter Bildung eines Polymerfilmes entfernt. Vorteilhaft erfolgt die Beschichtung, z.B. ein- bis dreimal, wobei für die nachfolgenden

Beschichtungen jeweils andere filmbildende Polymere und/oder UV-Strahlen absorbierende Mittel verwendet werden können.

Die erfindungsgemäßen geformten Gebilde können übliche Zusätze, wie z.B. lösliche Farbstoffe, Pigmente, Weißtöner, Aufheller und dergleichen enthalten.

Der Gegenstand der Erfindung sei an folgenden Beispielen veranschaulicht.

### Vergleichsbeispiel 1

Ein Polyetherketon mit den wiederkehrenden Einheiten 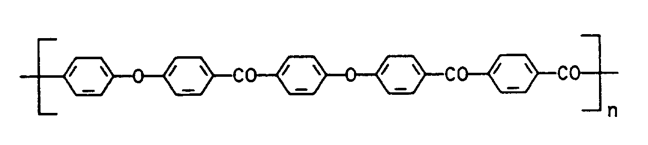
und einer relativen Lösungsviskosität von 1,478, gemessen in einer Lösung von 0,5 g Polymer in 100 ml 96 % H₂SO₄ bei 25°C, wurde in an sich bekannter Weise bei einer Schmelztemperatur von 415°C zu einem Multifilamentgarn versponnen und bei einer Temperatur von 250°C im Verhältnis 1:3 verstreckt. Die Fäden hatten folgende Eigenschaften:
- Titer:: 109/30 dtex
- Reißfestigkeit:: 5 cN/dtex
- Bruchdehnung:: 12 %
Die Fäden wurden zwecks Bestimmung der Licht- und UV-Beständigkeit 7 Tage lang in einer Belichtungsapparatur Xenotest 450 (Fa. Heräus, Hanau) exponiert.

Nach 7 Tagen Belichtung (30°C/65 % rel. Feuchte) hatten die Fäden nur noch 50 % ihrer ursprünglichen Reißfestigkeit und die Bruchdehnung war auf einen Wert von 5 % abgefallen.

### Vergleichsbeispiel 2

Polyetherketonfäden wurden, wie in Vergleichsbeispiel 1 beschrieben, hergestellt und mit einer Lösung von 10 g SnCl₂ · 2 H₂O und 12,6 g Tetraisopropyltitanat in 20 g abs. Ethanol und 10 g Eisessig bei Zimmertemperatur so beschichtet, daß ein Faserauftrag von ca. 7 %/getrocknete Faser resultierte.

Nach 7 Tagen Belichtung im Xenotest 450 war die Festigkeit auf 51 % des Anfangswertes abgefallen und die Bruchdehnung betrug nur noch 6 %. Die Haftung der stabilisierenden Verbindungen auf der Faser war schlecht und die stab. Verbindungen selbst waren ungleichmäßig auf der Faseroberfläche verteilt.

### Beispiel 1 (erfindungsgemäß)

Polyetherketonfäden gemäß Vergleichsbeispiel 1 wurden kontinuierlich mit einer Lösung von 7 g eines Polyethersulfons mit den wiederkehrenden Einheiten 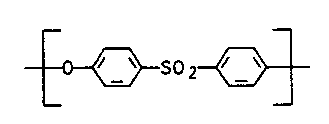
und einer rel. Lösungsviskosität von 1,313, gemessen 1 % in NMP bei 25°C, und 3,5 g eines UV-Stabilisators 2,4,2',4'-Tetrahydroxybenzophenon in 89,5 g N-Methylpyrrolidon so beschichtet, daß ein Auftrag auf der Faser nach dem Trocknen bei 230°C von 7 % resultierte. Die Haftung der als filmartiger Überzug auf der Faser befindlichen stabilisierenden Substanzen war auch nach dem Belichten gut. Nach einer Belichtung von 7 Tagen im Xenotest 450 war die Restfestigkeit der Fäden noch 84 % und die Bruchdehnung betrug noch 10 %.

### Beispiel 2 (erfindungsgemäß)

Polyetherketonfäden gemäß Beispiel 1 wurden kontinuierlich mit einer Lösung von 7 g eines Polysulfons mit den wiederkehrenden Einheiten 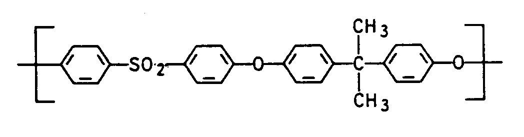
und einer rel. Lösungsviskosität von 1,306, gemessen 1 % in NMP bei 25°C und 1 g eines UV-Stabilisators der Formel 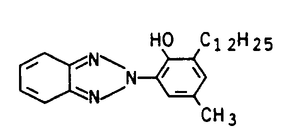
in 92 g N-Methylpyrrolidon so beschichtet, daß ein Auftrag auf der Faser nach dem Trocknen bei 230°C von 8 % resultierte.

Die Haftung des als filmartiger Überzug auf der Faser befindlichen Stabilisatorsystems war auch nach dem Belichten gut. Nach einer Belichtung von 7 Tagen im Xenotest 450 war die Restfestigkeit der Fäden noch 76 % und die Bruchdehnung noch 10 %.

### Beispiel 3 (erfindungsgemäß)

Ein Gewebe aus Polyetherketonfäden gemäß Beispiel 1 wurde diskontinuierlich mit einer Lösung beschichtet, die auf 100 g N-Methylpyrrolidon 7 g Polyethersulfon und 3,5 g 2',4',2',4'-Tetrahydroxybenzophenon enthielt. Nach dem Trocknen bei 230°C zwecks Entfernung des Lösungsmittels wurde das beschichtete Gewebe belichtet.
Ergebnis nach 7 Tagen Xenotest 450: 56 % Restfestigkeit.

### Beispiel 4 (erfindungsgemäß)

Polyetherketonfäden, wie in Beispiel 1 beschrieben, und mit 2 Gew.% eines löslichen gelben Farbstoffs eingefärbt, wurde, wie in Beispiel 1 beschrieben, behandelt.
Nach einer Belichtung der Fäden 7 Tage lang im Xenotest 450 betrug die Restfestigkeit noch 87 %.

## Patentansprüche

1. Geformte Gebilde aus aromatischen Polyetherketonen, die gegen UV-Strahlung stabilisiert sind, dadurch gekennzeichnet daß sie mit mindestens einem filmbildenden Polymeren, ausgewählt aus der Gruppe Polyvinylalkohol, Polyvinylacetat, Polyvinylpyrrolidon, Polyamid, Polyarylsulfon und deren Copolymeren, mit einem Gehalt an mindestens einem in dem filmbildenden Polymeren gelösten und/oder dispergierten UV-Strahlung absorbierenden Mitteln beschichtet sind.

2. Geformte Gebilde nach Anspruch 1, dadurch gekennzeichnet, daß das filmbildende Polymere ein Polyarylsulfon oder ein Polyarylsulfoncopolymer ist.

3. Geformte Gebilde nach Anspruch 1 oder 2, dadurch gekennzeichnet, daß sie aus der Schmelze geformte Fäden, Fasern oder Folien sind.

4. Geformte Gebilde aus aromatischen Polyetherketonen nach den Ansprüchen 1 bis 3, dadurch gekennzeichnet, daß die Schicht aus filmbildenden Polymeren aus 1 bis 3 Lagen besteht.

5. Geformte Gebilde aus aromatischen Polyetherketonen nach den Ansprüchen 1 bis 4, dadurch gekennzeichnet, daß die Schicht aus filmbildenden Polymeren mindestens ein sterisch gehindertes Phenol, ein Benztriazol oder Hydroxybenzophenon als UV-Strahlen absorbierendes Mittel enthält.

6. Verfahren zur Herstellung von geformten Gebilden aus aromatischen Polyetherketonen die gegen UV-Strahlung stabilisiert sind, dadurch gekennzeichnet, daß man geformte Gebilde aus aromatischen Polyetherketonen mit einer gegenüber Polyetherketonen indifferenten Lösung oder Dispersion eines filmbildenden Polymeren, ausgewählt aus der Gruppe Polyvinylalkohol, Polyvinylacetat, Polyvinylpyrrolidon, Polyamid, Polyarylsulfon und deren Copolymeren, die mindestens ein UV-Strahlen absorbierendes Mittel gelöst und/oder dispergiert enthält, beschichtet und das Lösungs- oder Dispergiermittel bei erhöhter Temperatur unter Bildung eines Polymerfilms entfernt.

7. Verfahren nach Anspruch 6, dadurch gekennzeichnet, daß man als Lösungsmittel N-Methylpyrrolidon, Dimethylformamid, Dimethylsulfoxid, Alkanole mit 1 bis 4 Kohlenstoffatomen, deren Ester mit niederen Fettsäuren, Wasser oder deren Gemische verwendet.

8. Verfahren nach den Ansprüchen 6 und 7, dadurch gekennzeichnet, daß man 5 bis 20 gew.%ige Lösungen von filmbildenden Polymeren verwendet.

9. Verfahren nach den Ansprüchen 6 bis 8, dadurch gekennzeichnet, daß man die geformten Gebilde aus aromatischen Polyetherketonen mindestens einmal in eine Losung oder Dispersion aus filmbildenden Polymeren, die ein UV-Strahlen absorbierendes Mittel enthält, taucht und anschließend durch Entfernen des Lösungs- oder Dispergiermittels durch Erhitzen auf eine Temperatur von bis zu 230°C einen Polymerfilm auf der Oberfläche erzeugt.

## Claims

1. A UV-stabilized formed structure from an aromatic polyether ketone, coated with at least one film-forming polymer selected from the group consisting of polyvinyl alcohol, polyvinyl acetate, polyvinylpyrrolidone, polyamide, polyaryl sulfone and copolymers thereof and containing at least one UV absorber dissolved or dispersed in said film-forming polymer.

2. A formed structure as claimed in claim 1, wherein the film-forming polymer is a polyaryl sulfone or a polyaryl sulfone copolymer.

3. A formed structure as claimed in claim 1 or 2, comprising a filament, fiber or film formed from the melt.

4. A formed structure from an aromatic polyether ketone as claimed in any of claims 1 to 3, wherein the coating of the film-forming polymer is from 1 to 3 layers deep.

5. A formed structure from an aromatic polyether ketone as claimed in any of claims 1 to 4, wherein the coating of film-forming polymer contains at least one sterically hindered phenol, a benzotriazole or a hydroxybenzophenone as UV absorber.

6. A process for producing a UV-stabilized formed structure from an aromatic polyether ketone, which comprises coating a formed structure from an aromatic polyether ketone with a solution or dispersion of a film-forming polymer, selected from the group consisting of polyvinyl alcohol, polyvinyl acetate, polyvinyl-pyrrolidone, polyamide, polyaryl sulfone and copolymers thereof, which is inert toward polyether ketones and contains at least one UV absorber in solution or dispersion, and removing the solvent or dispersion medium at elevated temperature to leave a polymer film.

7. A process as claimed in claim 6, wherein the solvent used is N-methylpyrrolidone, dimethylformamide, dimethyl sulfoxide, an alkanol of from 1 to 4 carbon atoms, an ester thereof with a lower fatty acid, water or a mixture thereof.

8. A process as claimed in claims 6 and 7, wherein the solution of film-forming polymer is from 5 to 20% by weight in strength.

9. A process as claimed in any of claims 6 to 8, wherein the formed structure of an aromatic polyether ketone is dipped at least once into a solution or dispersion of film-forming polymer containing a UV absorber and then the solvent or dispersion medium is removed by heating at up to 230°C to produce a polymer film on the surface.

## Revendications

1. Articles façonnés en polyéthercétones aromatiques, qui sont stabilisés à l'égard des rayons UV, caractérisés en ce qu'ils sont revêtus d'au moins un polymère filmogène, choisi dans le groupe des poly(alcool vinylique), poly(acétate de vinyle), polyvinylpyrrolidone, polyamides, polyarylsulfones et de leurs copolymères, avec une teneur en au moins un agent absorbant les rayons UV, en solution et/ou en dispersion dans le polymère filmogène.

2. Articles façonnés selon la revendication 1, caractérises en ce que le polymère filmogène est une polyarylsulfone ou un copolymère de polyarylsulfone.

3. Articles façonnés selon la revendication 1 ou 2, caractérisés en ce qu'il s'agit de fils, de fibres ou de feuilles formés à partir de la masse fondue.

4. Articles façonnés en polyéthercétones aromatiques selon l'une quelconque des revendications 1 à 3, caractérisés en ce que le revêtement de polymère filmogène se compose de 1 à 3 couches.

5. Articles façonnés en polyéthercétones aromatiques selon l'une quelconque des revendications 1 à 4, caractérisés en ce que le revêtement de polymère filmogène contient, en tant qu'agent absorbant les rayons UV, au moins un phénol empêche stériquement, un benzotriazole ou une hydroxybenzophénone.

6. Procédé de fabrication d'articles façonnés en polyéthercétones aromatiques, qui sont stabilisés à l'égard des rayons UV, caractérisé en ce qu'on enduit les articles façonnés en polyéthercétones aromatiques d'une solution ou d'une dispersion, inerte vis-à-vis des polyéthercétones, d'un polymère filmogène qui est choisi dans le groupe des poly(alcool vinylique), poly(acétate de vinyle), polyvinylpyrrolidone, polyamides, polyarylsulfones et de leurs copolymères et qui contient en solution et/ou en dispersion au moins un agent absorbant les rayons UV, et on élimine le solvant ou le milieu de dispersion à température élevée, ce qui conduit à la formation d'un film du polymère.

7. Procédé selon la revendication 6, caractérisé en ce qu'on utilise, comme solvant, de la N-méthylpyrrolidone, du diméthylformamide, du diméthylsulfoxyde, des alcanols à 1-4 atomes de carbone, leurs esters avec des acides gras inférieurs, de l'eau ou des mélanges de ces solvants.

8. Procédé selon la revendication 6 ou 7, caractérisé en ce qu'on utilise des solutions à 5-20% en poids de polymères filmogènes.

9. Procédé selon l'une quelconque des revendications 6 à 8, caractérisé en ce qu'on plonge au moins une fois les articles façonnés en polyéthercétones aromatiques dans une solution ou une dispersion de polymères filmogènes qui contient un agent absorbant les rayons UV, puis on forme sur la surface un film de polymère par élimination du solvant ou du milieu de dispersion par chauffage à une température pouvant aller jusqu'à 230°C.
